(19)

Europäisches
Patentamt
European
Patent Office
Office européen
des brevets

(11)  **EP 3 677 698 A1**

(12)  **EUROPEAN PATENT APPLICATION**
published in accordance with Art. 153(4) EPC

(43)  Date of publication:
08.07.2020  Bulletin 2020/28

(21)  Application number: 17927364.4

(22)  Date of filing: 28.09.2017

(51)  Int Cl.:
$C22C\ 38/00^{(2006.01)}$  $C21D\ 8/02^{(2006.01)}$
$C22C\ 38/06^{(2006.01)}$  $C22C\ 38/58^{(2006.01)}$

(86)  International application number:
**PCT/JP2017/035330**

(87)  International publication number:
**WO 2019/064459 (04.04.2019 Gazette 2019/14)**

(84)  Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71)  Applicant: **JFE Steel Corporation**
**Tokyo 100-0011 (JP)**

(72)  Inventors:
- **YASUDA Kyono**
  **Tokyo 100-0011 (JP)**
- **YOKOTA Tomoyuki**
  **Tokyo 100-0011 (JP)**

(74)  Representative: **Haseltine Lake Kempner LLP**
**Bürkleinstrasse 10**
**80538 München (DE)**

(54)  **HIGH-STRENGTH STEEL PLATE FOR SOUR RESISTANT LINE PIPE, METHOD FOR MANUFACTURING SAME, AND HIGH-STRENGTH STEEL PIPE USING HIGH-STRENGTH STEEL PLATE FOR SOUR RESISTANT LINE PIPE**

(57)  Disclosed is a high strength steel plate for sour-resistant line pipes that has excellent HIC resistance both in the central segregation area and the surface layer. The disclosed high strength steel plate for sour-resistant line pipes has a chemical composition containing C, Si, Mn, P, S, Al, and Ca in predetermined amounts, with the balance being Fe and inevitable impurities, in which a hydrogen diffusion coefficient at a plate thickness center is $5.0 \times 10^{-6} cm^2/s$ or more, a maximum value of Vickers hardness HV 0.1 at 0.5 mm below a surface of the steel plate is 250 or less, and a tensile strength is 520 MPa or more.

EP 3 677 698 A1

**Description**

TECHNICAL FIELD

This disclosure relates to a high strength steel plate for sour-resistant line pipes that is excellent in material homogeneity in the steel plate and that is suitable for use in line pipes in the fields of construction, marine structure, shipbuilding, civil engineering, and construction industry machinery, and to a method of manufacturing the same. This disclosure also relates to a high strength steel pipe using the high strength steel plate for sour-resistant line pipes.

BACKGROUND

In general, a line pipe is manufactured by forming a steel plate manufactured by a plate mill or a hot rolling mill into a steel pipe by UOE forming, press bend forming, roll forming, or the like.

The line pipe used to transport crude oil and natural gas containing hydrogen sulfide is required to have so-called sour resistance such as resistance to hydrogen-induced cracking (HIC resistance) and resistance to sulfide stress corrosion cracking (SSCC resistance), in addition to strength, toughness, weldability, and so on. Above all, in HIC, hydrogen ions caused by corrosion reaction adsorb on the steel surface, penetrate into the steel as atomic hydrogen, diffuse and accumulate around non-metallic inclusions such as MnS in the steel and the hard second phase structure, and become molecular hydrogen, thereby causing cracking due to its internal pressure.

Several methods have been proposed to prevent such HIC. JPS54-110119A (PTL 1) describes a method of manufacturing a steel for line pipes excellent in HIC resistance, whereby Ca and Ce are added in appropriate amounts with respect to S content to suppress generation of acicular MnS such that MnS can be converted into finely-dispersed spherical inclusions with less stress concentration, thereby suppressing occurrence and propagation of cracks. JPS61-60866A (PTL 2) and JPS61-165207A (PTL 3) describe steels excellent in HIC resistance, in which by reducing the content of elements with high segregation tendency (such as C, Mn, and P), performing soaking during slab heating, and conducting accelerated cooling in the course of transformation during cooling, formation of hardened microstructures is suppressed, such as martensite austenite constituent, which would provide origins of cracks in a central segregation area, and martensite and bainite, which would serve as propagation paths of cracks. Further, JPH5-9575A (PTL 4), JPH5-271766A (PTL 5), and JPH7-173536A (PTL 6) propose methods of suppressing central segregation in a high strength steel plate by keeping the C and Mn contents low, while performing morphological control of inclusions by keeping the S content low and adding Ca, and supplementing the decrease in strength associated therewith by adding Cr, Mn, Ni, and the like and performing accelerated cooling.

In general, so-called TMCP (Thermo-Mechanical Control Process) technology, which combines controlled rolling and controlled cooling, is applied when manufacturing high strength steel plates for line pipes. In order to increase the strength of steel materials using the TMCP technology, it is effective to increase the cooling rate during controlled cooling. However, when controlled cooling is performed at a high cooling rate, a surface layer of the steel plate is rapidly cooled. Therefore, the hardness of the surface layer becomes higher than the interior, causing a problem with the occurrence of HIC at the surface layer.

In order to solve the above problems, for example, JP3951428B (PTL 7) and JP3951429B (PTL 8) describe methods of manufacturing steel plates with a reduced material property difference in the plate thickness direction by performing high-speed controlled cooling in which the surface is recuperated before completion of bainite transformation in the surface layer after rolling. Further, JP2002-327212A (PTL 9) and JP3711896B (PTL 10) describe methods of manufacturing steel plates for line pipes in which the hardness of the surface layer is reduced by heating the surface of a steel plate after accelerated cooling to a higher temperature than the interior using a high frequency induction heating device.

CITATION LIST

Patent Literature

PTL 1: JPS54-110119A

PTL 2: JPS61-60866A

PTL 3: JPS61-165207A

PTL 4: JPH5-9575A

PTL 5: JPH5-271766A

PTL 6: JPH7-173536A

PTL 7: JP3951428B

PTL 8: JP3951429B

PTL 9: JP2002-327212A

PTL 10: JP3711896B

SUMMARY

(Technical Problem)

However, all of the techniques of PTLs 1 to 6 focus on the central segregation area. When a steel plate is manufactured by using TMCP technology, there are concerns about material property variations in the plate thickness direction, and thus there is room for improvements in terms of HIC resistance in the surface layer.

On the other hand, in the manufacturing methods described in PTLs 7 and 8, when the transformation behavior differs depending on the compositions of the steel plate, a sufficient material homogenization effect may not be obtained by heat recuperation. In the manufacturing methods described in PTLs 9 and 10, the cooling rate at the surface layer in accelerated cooling is so high that the hardness of the surface layer may not be sufficiently reduced only by heating the steel plate surface.

It would thus be helpful to provide a high strength steel plate for sour-resistant line pipes having excellent HIC resistance in both a central segregation area and a surface layer, and an advantageous method of manufacturing the same. It would also be helpful to propose a high strength steel pipe using the high strength steel plate for sour-resistant line pipes.

(Solution to Problem)

To ensure proper HIC resistance in a central segregation area and a surface layer, the present inventors made intensive studies on the chemical compositions, microstructures, and manufacturing conditions of steel materials. As a result, it was found that the mechanism of HIC occurring at a surface layer of a high strength steel pipe is such that there are locally high-hardness sites in an outermost surface layer part of the steel plate (specifically, a region ranging from the steel plate surface to a depth of about 0.5 mm below the surface of the steel plate), and hydrogen enters from these sites and HIC cracks occur originating therefrom. In other words, in order to improve HIC resistance in the surface layer, it was found that merely suppressing the surface layer hardness is insufficient, and in particular, that it is important to suppress the maximum hardness in an outermost surface layer part of the steel plate, specifically, the maximum hardness at 0.5 mm below the surface of the steel plate, to a predetermined value or less. The present inventors also found that control of the hydrogen diffusion coefficient at the plate thickness center is important for the HIC resistance in a central segregation area. Further, to manufacture such a steel plate, it is necessary to strictly control the cooling rate at 0.5 mm below the surface of the steel plate and at the plate thickness center, and the present inventors successfully found the conditions. The present disclosure was completed based on the above discoveries.

We thus provide:

[1] A high strength steel plate for sour-resistant line pipes comprising: a chemical composition containing (consisting of), by mass%, C: 0.02 % to 0.08 %, Si: 0.01 % to 0.50 %, Mn: 0.50 % to 1.80 %, P: 0.001 % to 0.015 %, S: 0.0002 % to 0.0015 %, Al: 0.01 % to 0.08 %, and Ca: 0.0005 % to 0.005 %, with the balance being Fe and inevitable impurities, wherein a hydrogen diffusion coefficient at a plate thickness center is $5.0 \times 10^{-6} \mathrm{cm}^2/\mathrm{s}$ or more, a maximum value of Vickers hardness HV 0.1 at 0.5 mm below a surface of the steel plate is 250 or less, and a tensile strength is 520 MPa or more.

[2] The high strength steel plate for sour-resistant line pipes according to the foregoing [1], wherein the chemical composition further contains, by mass%, at least one selected from the group consisting of Cu: 0.50 % or less, Ni: 0.50 % or less, Cr: 0.50 % or less, and Mo: 0.50 % or less.

[3] The high strength steel plate for sour-resistant line pipes according to the foregoing [1] or [2], wherein the chemical composition further contains, by mass%, at least one selected from the group consisting of Nb: 0.005 % to 0.1 %, V: 0.005 % to 0.1 %, and Ti: 0.005 % to 0.1 %.

[4] A method of manufacturing a high strength steel plate for sour-resistant line pipes, the method comprising: preparing a slab having a chemical composition containing (consisting of), by mass%, C: 0.02 % to 0.08 %, Si: 0.01 % to 0.50 %, Mn: 0.50 % to 1.80 %, P: 0.001 % to 0.015 %, S: 0.0002 % to 0.0015 %, Al: 0.01 % to 0.08 %, and Ca: 0.0005 % to 0.005 %, with the balance being Fe and inevitable impurities, then heating the slab to a temperature of 1000 °C to 1300 °C, and then hot rolling the slab to obtain a steel plate; and then subjecting the steel plate to controlled cooling under a set of conditions including: a temperature of a surface of the steel plate at the start of cooling being ($Ar_3$ - 10°C) or higher; an average cooling rate in a temperature range from 750 °C to 550 °C in terms of a temperature of the steel plate at 0.5 mm below the surface of the steel plate being 100 °C/s or lower; an average cooling rate in a temperature range from 750 °C to 550 °C in terms of a temperature of the steel plate at a plate thickness center being 15 °C/s or higher and 60 °C/s or lower; and a cooling stop temperature in terms of the temperature of the steel plate at the plate thickness center being 250 °C to 550 °C.

[5] The method of manufacturing a high strength steel plate for sour-resistant line pipes according to the foregoing [4], wherein the chemical composition further contains, by mass%, at least one selected from the group consisting of Cu: 0.50 % or less, Ni: 0.50 % or less, Cr: 0.50 % or less, and Mo: 0.50 % or less.

[6] The method of manufacturing a high strength steel plate for sour-resistant line pipes according to the foregoing [4] or [5], wherein the chemical composition further contains, by mass%, at least one selected from the group consisting of Nb: 0.005 % to 0.1 %, V: 0.005 % to 0.1 %, and Ti: 0.005 % to 0.1 %.

[7] A high strength steel pipe using the high strength steel plate for sour-resistant line pipes as recited in any one of the foregoing [1] to [3].

(Advantageous Effect)

The high strength steel plate for sour-resistant line pipes disclosed herein and a high strength steel pipe using the same have excellent HIC resistance both in a central segregation area and a surface layer. In addition, according to the method of manufacturing a high strength steel plate for sour-resistant line pipes disclosed herein, it is possible to manufacture a high strength steel plate for sour-resistant line pipes that has excellent HIC resistance both both in a central segregation area and a surface layer.

BRIEF DESCRIPTION OF THE DRAWING

FIG. 1 is a schematic diagram illustrating a method of taking a test piece for measuring the hydrogen diffusion coefficient according to one of the embodiments of the present disclosure.

DETAILED DESCRIPTION

Hereinafter, the high strength steel plate for sour-resistant line pipes according to the present disclosure will be described in detail.

[Chemical composition]

First, the chemical composition of the high strength steel plate disclosed herein and the reasons for limitation thereof will be described. Hereinbelow, all units shown by % are mass%.

C: 0.02 % to 0.08 %

C contributes effectively to the improvement of strength. However, when the content is less than 0.02 %, sufficient strength can not be secured. On the other hand, when the content is more than 0.08 %, the hardness is increased during accelerated cooling. In addition, formation of hard phases such as martensite and martensite austenite constituent (MA) is promoted, causing deterioration of HIC resistance in a central segregation area and a surface layer. The toughness also decreases. Therefore, the C content is set in a range of 0.02 % to 0.08 %.

Si: 0.01 % to 0.50 %

Si is added for deoxidation. However, if the content is less than 0.01 %, the deoxidizing effect is not sufficient, while if it exceeds 0.50 %, the toughness and weldability are degraded. Therefore, the Si content is in a range of 0.01 % to 0.50 %.

Mn: 0.50 % to 1.80 %

Mn contributes effectively to the improvement of strength and toughness. However, if the content is less than 0.50 %, the addition effect is poor, while if it exceeds 1.80 %, the hardness is increased during accelerated cooling. In addition, formation of hard phases such as martensite and martensite austenite constituent (MA) is promoted, causing deterioration of HIC resistance in a central segregation area and a surface layer. The weldability also decreases. Therefore, the Mn content is set in a range of 0.50 % to 1.80 %.

P: 0.001 % to 0.015 %

P is an inevitable impurity element that degrades weldability and that increases the hardness at a central segregation area, causing deterioration of HIC resistance in the central segregation area. This tendency becomes more pronounced when the content exceeds 0.015 %. Therefore, the upper limit is set at 0.015 %. Preferably, the P content is 0.008 % or less. Although a lower P content is preferable, the P content is set to 0.001 % or more from the viewpoint of the refining cost.

S: 0.0002 % to 0.0015 %

S is an inevitable impurity element that forms MnS inclusions in steel, causing deterioration of HIC resistance in a central segregation area. Thus, a lower S content is preferable, yet up to 0.0015 % is acceptable. Although a lower S content is preferable, the S content is set to 0.0002 % or more from the viewpoint of the refining cost.

Al: 0.01 % to 0.08 %

Al is added as a deoxidizing agent. However, an Al content below 0.01 % provides no addition effect, while an Al content beyond 0.08 % lowers the cleanliness of the steel and deteriorates the toughness. Therefore, the Al content is in a range of 0.01 % to 0.08 %.

Ca: 0.0005 % to 0.005 %

Ca is an effective element for improving HIC resistance in a central segregation area through morphological control of sulfide inclusions. If the content is less than 0.0005 %, however, the addition effect is not sufficient. On the other hand, if the content exceeds 0.005 %, not only the addition effect saturates, but also the HIC resistance in a surface layer is deteriorated due to the reduction in the cleanliness of the steel. Therefore, the Ca content is in a range of 0.0005 % to 0.005 %.
The basic components of the present disclosure have been described above. Optionally, however, the chemical composition of the present disclosure may also contain at least one selected from the group consisting of Cu, Ni, Cr, and Mo to further improve the strength and toughness of the steel plate.

Cu: 0.50 % or less

Cu is an effective element for improving the toughness and increasing the strength. To obtain this effect, the Cu content is preferably 0.05 % or more, yet if the content is too large, the weldability deteriorates. Therefore, when Cu is added, the Cu content is up to 0.50 %.

Ni: 0.50% or less

Ni is an effective element for improving the toughness and increasing the strength. To obtain this effect, the Ni content is preferably 0.05 % or more, yet excessive addition of Ni is not only economically disadvantageous but also deteriorates the toughness of the heat-affected zone. Therefore, when Ni is added, the Ni content is up to 0.50 %.

Cr: 0.50 % or less

Cr, like Mn, is an effective element for obtaining a sufficient strength even at low C content. To obtain this effect, the Cr content is preferably 0.05 % or more, yet if the content is too large, the weldability deteriorates. Therefore, when Cr is added, the Cr content is up to 0.50 %.

Mo: 0.50 % or less

Mo is an element effective for improving the toughness and increasing the strength. To obtain this effect, the Mo content is preferably 0.05 % or more, yet if the content is too large, the weldability deteriorates. Therefore, when Mo is added, the Mo content is up to 0.50 %.

The chemical composition according to the present disclosure may further optionally contain at least one selected from the group consisting of Nb, V, and Ti in the following ranges.

At least one selected from the group consisting of Nb: 0.005 % to 0.1 %, V: 0.005 % to 0.1 %, and Ti: 0.005 % to 0.1 %

All of Nb, V, and Ti are elements that can be optionally added to enhance the strength and toughness of the steel plate. If the content of each added element is less than 0.005 %, the addition effect is poor, while if it exceeds 0.1 %, the toughness of the welded portion deteriorates. Therefore, the content of each added element is preferably in a range of 0.005 % to 0.1 %.

To satisfy the HIC resistance requirements in a central segregation area, for example, it is preferable that a CP value determined by Expression (1) below is 1.00 or less. For any element not added, what is necessary is just to substitute 0.

$$CP = 4.46[\%C] + 2.37[\%Mn]/6 + (1.74[\%Cu] + 1.7[\%Ni])/15 + (1.18[\%Cr] + 1.95[\%Mo] + 1.74[\%V])/5 + 22.36[\%P] \qquad (1),$$

where [%X] indicates the content by mass% of the element X in steel.

As used herein, the CP value is a formula devised to estimate the material property at the central segregation area from the content of each alloying element, and the component concentrations in the central segregation area are higher as the CP value of Expression (1) is higher, causing a rise in hardness in the central segregation area. Therefore, by setting the CP value obtained in Expression (1) to 1.00 or less, it is possible to suppress the occurrence of cracking in a central segregation area in the HIC test. Further, as the CP value becomes smaller, the hardness at the central segregation area becomes lower. Thus, if even higher HIC resistance at the central segregation area is required, the upper limit for the CP value may be set to 0.95.

The balance other than the above-described elements is Fe and inevitable impurities. However, there is no intention in this expression of precluding the inclusion of other trace elements, without impairing the action or effect of the present disclosure.

[Hydrogen diffusion coefficient]

In the present disclosure, it is important that the hydrogen diffusion coefficient at the plate thickness center is $5.0 \times 10^{-6} cm^2/s$ or more. A larger hydrogen diffusion coefficient can reduce the amount of hydrogen in steel more effectively, suppressing the occurrence of HIC in sour environments. In other words, when the steel microstructure is a bainite microstructure having a hydrogen diffusion coefficient of $5.0 \times 10^{-6} cm^2/s$ or more, it is possible to obtain the effect of improving the HIC resistance in a central segregation area.

The steel microstructure is a bainite microstructure over the entire steel plate including the surface layer. In particular, when a hard phase such as martensite or martensite austenite constituent (MA) is formed, propagation of cracks is promoted, and the HIC resistance in the surface layer and the central segregation area deteriorates. In this case, the bainite microstructure includes a microstructure called bainitic ferrite or granular ferrite which contributes to transformation strengthening. These microstructures appear through transformation during or after accelerated cooling. If different microstructures such as ferrite, martensite, pearlite, martensite austenite constituent, retained austenite, and the like are mixed in the bainite microstructure, a decrease in strength, deterioration in toughness, deterioration in HIC resistance, and the like occur. Therefore, it is preferable that microstructures other than the bainite phase have smaller proportions. However, when the volume fraction of such microstructures other than the bainitic phase is sufficiently low, their effects are negligible, and up to a certain amount is acceptable. Specifically, in the present disclosure, if the total of the steel microstructures other than bainite (such as ferrite, martensite, pearlite, martensite austenite constituent, and retained austenite) is less than 5 % by volume fraction, there is no adverse effect, and this is acceptable.

[Maximum hardness at the outermost surface layer part]

In the present disclosure, it is important that the maximum value of Vickers hardness HV 0.1 at 0.5 mm below the surface of the steel plate is 250 or less. This ensures proper HIC resistance in the surface layer. In the present disclosure, the "maximum value of Vickers hardness HV 0.1 at 0.5 mm below the surface of the steel plate" is determined as the maximum value of the results of measuring HV 0.1 at any 100 locations or more 0.5 mm below the surface of the steel plate.

[Tensile strength]

The high strength steel plate disclosed herein is a steel plate for steel pipes having a strength of X60 grade or higher in API 5L, and thus has a tensile strength of 520 MPa or more.

[Manufacturing method]

Hereinafter, the method and conditions for manufacturing the above-described high strength steel plate for sour-resistant line pipes will be described concretely. The manufacturing method according to the present disclosure comprises: heating a slab having the above-described chemical composition, and then hot rolling the slab to obtain a steel plate; then subjecting the steel plate to controlled cooling under predetermined conditions.

[Slab heating temperature]

Slab heating temperature: 1000 °C to 1300 °C

If the slab heating temperature is lower than 1000 °C, carbides do not solute sufficiently and the necessary strength can not be obtained. On the other hand, if the slab heating temperature exceeds 1300 °C, the toughness is deteriorated. Therefore, the slab heating temperature is set to 1000 °C to 1300 °C. This temperature is the temperature in the heating furnace, and the slab is heated to this temperature to the center.

[Rolling finish temperature]

In a hot rolling step, in order to obtain high toughness for base metal, a lower rolling finish temperature is preferable, yet on the other hand, the rolling efficiency is lowered. Thus, the rolling finish temperature in terms of a temperature of the surface of the steel plate needs to be set in consideration of the required toughness for base metal and rolling efficiency. From the viewpoint of improving the strength and the HIC resistance in the central segregation area and the surface layer, it is preferable to set the rolling finish temperature at or above the $Ar_3$ transformation temperature in terms of the temperature of the surface of the steel plate. As used herein, the $Ar_3$ (1) transformation temperature means ferrite transformation start temperature during cooling, and can be determined, for example, from the components of steel according to the following equation. Further, in order to obtain high toughness for base metal, it is desirable to set the rolling reduction ratio in a temperature range of 950 °C or lower corresponding to the austenite non-recrystallization temperature range to 60 % or more. The temperature of the surface of the steel plate can be measured by a radiation thermometer or the like.

$$Ar_3(°C) = 910 - 310[\%C] - 80[\%Mn] - 20[\%Cu] - 15[\%Cr] - 55[\%Ni] - 80[\%Mo],$$

where [%X] indicates the content by mass% of the element X in steel.

[Cooling start temperature in the controlled cooling]

Cooling start temperature: ($Ar_3$ - 10 °C) or higher in terms of the temperature of the surface of the steel plate

If the temperature of the surface of the steel plate is low at the start of cooling, ferrite forms in a large amount before controlled cooling, in particular, when the temperature drop from the $Ar_3$ transformation temperature exceeds 10 °C, ferrite forms in a volume fraction of more than 5 %, causing a significant reduction in the strength and a deterioration in the HIC resistance in the central segregation area and the surface layer. Therefore, the temperature of the surface of the steel plate at the start of cooling is set to ($Ar_3$ - 10 °C) or higher.

[Cooling rate of the controlled cooling]

For the purpose of obtaining proper HIC resistance in the central segregation area and the surface layer, it is necessary to control the cooling rate at 0.5 mm below the surface of the steel plate and at the plate thickness center in order to ensure that the hydrogen diffusion coefficient at the plate thickness center is $5.0 \times 10^{-6} cm^2/s$ or more and the maximum hardness at 0.5 mm below the surface of the steel plate is 250 or less in terms of HV 0.1.

Average cooling rate in a temperature range from 750 °C to 550 °C in terms of a temperature of the steel plate at 0.5 mm below the surface of the steel plate: 100 °C/s or lower

If the average cooling rate in a temperature range from 750 °C to 550 °C in terms of a temperature of the steel plate at 0.5 mm below the surface of the steel plate exceeds 100 °C/s, HV 0.1 at 0.5 mm below the surface of the steel plate exceeds 250, causing deterioration of HIC resistance in the surface layer. Therefore, the average cooling rate is set to 100 °C/s or lower. It is preferably 80 °C/s or lower. The lower limit of the average cooling rate is not particularly limited, yet if the cooling rate is excessively low, ferrite and pearlite are generated and the strength is insufficient. Therefore, from the viewpoint of preventing this, 20 °C/s or higher is preferable.

Average cooling rate in a temperature range from 750°C to 550°C in terms of a temperature of the steel plate at the plate thickness center: 15 °C/s or higher and 60 °C/s or lower

If the average cooling rate in a temperature range from 750 °C to 550 °C in terms of a temperature of the steel plate at the plate thickness center is lower than 15 °C/s, ferrite or pearlite forms, causing a decrease in strength or a drop in the hydrogen diffusion coefficient, causing deterioration of HIC resistance in the central segregation area. Therefore, the average cooling rate is set to 15 °C/s or higher. From the viewpoint of variations in strength and hardness of the steel plate, the average cooling rate is preferably 20 °C./s or higher. On the other hand, when the average cooling rate exceeds 60 °C/s, the hydrogen diffusion coefficient at the plate thickness center is lowered, causing deterioration of HIC resistance in the central segregation area. Therefore, the average cooling rate is set to 60 °C/s or lower. Preferably, it is 50 °C/s or lower.

[Cooling stop temperature]

Cooling stop temperature: 250 °C to 550 °C in terms of the temperature of the steel plate at the plate thickness center

After the completion of rolling, a bainite phase is generated by performing controlled cooling to quench the steel plate to a temperature range of 250 °C to 550 °C which is the temperature range of bainite transformation. When the cooling stop temperature exceeds 550 °C at the plate thickness center, sufficient strength can not be obtained. Moreover, bainite transformation is incomplete, MA and pearlite form in the central segregation area, and the hydrogen diffusion coefficient may decrease, resulting in degradation of HIC resistance in the central segregation area. On the other hand, when the cooling stop temperature is lower than 250 °C at the plate thickness center, martensite forms in the central segregation area, causing deterioration of HIC resistance in the central segregation area. Therefore, in order to suppress the degradation of HIC resistance in the central segregation area, the cooling stop temperature in the controlled cooling is set to 250 °C to 550 °C in terms of the temperature of the steel plate at the plate thickness center.
Although the temperatures of the steel plate at 0.5 mm below the surface of the steel plate and at the plate thickness center can not be directly measured physically, a temperature distribution in a cross section in the plate thickness direction can be determined in real time, for example, by difference calculation using a process computer on the basis of the surface temperature at the start of cooling measured with a radiation thermometer and the target surface temperature at the end of cooling. As used herein, the temperature at 0.5 mm below the surface of the steel plate in the temperature distribution is referred to as the "temperature at 0.5 mm below the surface of the steel plate", and the temperature at the plate thickness center in the temperature distribution as the "temperature of the steel plate at the plate thickness center".

[High strength steel pipe]

By forming the high strength steel plate disclosed herein into a tubular shape by press bend forming, roll forming, UOE forming, or the like, and then welding the butting portions, a high strength steel pipe for sour-resistant line pipes (such as a UOE steel pipe, an electric-resistance welded steel pipe, and a spiral steel pipe) that has excellent material homogeneity in the steel plate and that is suitable for transporting crude oil and natural gas can be manufactured.
For example, an UOE steel pipe is manufactured by milling and beveling the edges of a steel plate, forming the steel plate into a steel pipe shape by C press, U-ing press, and O-ing press, then seam welding the butting portions by inner surface welding and outer surface welding, and optionally subjecting it to an expansion process. Any welding method may be applied as long as sufficient joint strength and joint toughness are guaranteed, yet it is preferable to use submerged arc welding from the viewpoint of excellent weld quality and manufacturing efficiency.

EXAMPLES

Steels having the chemical compositions listed in Table 1 (Steel Sample IDs A to I) were prepared and subjected to continuous casting to obtain slabs, and the slabs were heated to the temperatures listed in Table 2, and then hot rolled to obtain steel plates having the thicknesses listed in Table 2. Then, each steel plate was subjected to controlled cooling using a water-cooling type controlled-cooling device under the conditions listed in Table 2.

[Identification of microstructure]

The microstructure of each obtained steel plate was observed with an optical microscope and a scanning electron microscope. The microstructure at a position of 0.5 mm below the surface of each steel plate and the microstructure at the plate thickness center ($t/2$ position) are listed in Table 2.

[Hydrogen diffusion coefficient]

The hydrogen diffusion coefficient was evaluated using 1 mm $\times$ 40 mm $\times$ 40 mm test pieces taken from the mid-thickness part as illustrated in FIG 1. Each test piece was subjected to Ni coating on one side, and the other side not subjected to the Ni coating was immersed in a 0.2 % NaCl solution using a Devanathan cell and subjected to hydrogen cathodic charging, while the side subjected to Ni coating was immersed in a 0.1N NaOH aqueous solution and the hydrogen withdrawal potential was set at 0 V. The hydrogen permeation start time (2nd Build up), which corresponds to the rise of the second permeation current, was fitted with a theoretical curve to determine the diffusion coefficient. The results are listed in Table 2.

[Measurement of Vickers hardness]

For a cross section perpendicular to the rolling direction, the Vickers hardness (HV 0.1) were measured at 100 locations 0.5 mm below the surface of the steel plate in accordance with JIS Z 2244, and the maximum value was determined. The results are listed in Table 2.

[Measurement of tensile strength]

Tensile test was conducted using full-thickness test pieces taken in a direction perpendicular to the rolling direction as tensile test pieces to measure the tensile strength. The results are listed in Table 2.

[Evaluation of HIC resistance]

For evaluation of HIC resistance, HIC test was conducted for an immersion time of 96 hours in accordance with the NACE Standard TM00284, and the cracking area ratio (CAR) was measured at the surface layer and at the $t/2$ position. The HIC resistance was determined to be "good" when the CAR was 3.0 % or less, or "poor" when the CAR was greater than 3.0 %. The results are listed in Table 2.
The target ranges of the present disclosure are as follows: as a high strength steel plate for sour-resistant line pipes, the tensile strength is 520 MPa or more and the CAR as measured in the HIC test is 3.0 % or less both at the surface layer and at the $t/2$ position.

Table 1

| Steel sample ID | Chemical composition (mass%) | | | | | | | | | | | | | | CP | Ar$_3$ temp. (°C) |
|---|---|---|---|---|---|---|---|---|---|---|---|---|---|---|---|---|
| | c | Si | Mn | P | S | Al | Ca | Cu | Ni | Cr | Mo | Nb | V | Ti | | |
| A | 0.066 | 0.36 | 1.38 | 0.005 | 0.0005 | 0.021 | 0.002 | | | | | | | | 0.95 | 779 |
| B | 0.039 | 0.23 | 1.31 | 0.005 | 0.0004 | 0.025 | 0.002 | 0.20 | 0.28 | | 0.15 | | | | 0.92 | 762 |
| C | 0.042 | 0.29 | 1.63 | 0.005 | 0.0006 | 0.023 | 0.003 | | | | | 0.023 | | | 0.94 | 767 |
| D | 0.043 | 0.32 | 1.36 | 0.004 | 0.0005 | 0.022 | 0.002 | | | 0.28 | 0.12 | 0.022 | | | 0.93 | 774 |
| E | 0.042 | 0.26 | 1.37 | 0.005 | 0.0004 | 0.031 | 0.002 | 0.24 | 0.26 | 0.33 | | 0.026 | 0.007 | | 0.98 | 763 |
| F | 0.044 | 0.18 | 1.39 | 0.004 | 0.0006 | 0.027 | 0.002 | | | 0.35 | | 0.023 | | 0.008 | 0.92 | 780 |
| G | 0.086 | 0.30 | 1.33 | 0.005 | 0.0006 | 0.023 | 0.002 | | | 0.22 | 0.05 | 0.025 | | | 1.09 | 770 |
| H | 0.042 | 0.33 | 1.87 | 0.006 | 0.0006 | 0.030 | 0.003 | | | | | 0.027 | | | 1.06 | 747 |
| I | 0.040 | 0.27 | 1.38 | 0.019 | 0.0005 | 0.027 | 0.002 | | | 0.27 | 0.15 | 0.026 | | | 1.27 | 771 |

Note 1: The balance is Fe and inevitable impurities.
Note 2: Underlined if outside the scope of the disclosure.

Table 2

| No. | Steel type | Plate thickness (mm) | Heating temp. (°C) | Cooling start temp. (surface) (°C) | Cooling start temp. - $Ar_3$ (surface) (°C) | Average cooling rate | | Cooling stop temp. (t/2) (°C) | Micro structure | | Hydrogen diffusion coefficient ($cm^2/s$) | HV 0.1 (S+0.5) | Tensile strength (MPa) | HIC performance | | Remarks |
|---|---|---|---|---|---|---|---|---|---|---|---|---|---|---|---|---|
| | | | | | | S + 0.5 (°C/s) | t/2 (°C/s) | | S + 0.5 | t/2 | | | | Surface layer | t/2 | |
| 1 | A | 25 | 1082 | 824 | 45 | 62 | 26 | 451 | B | B | 1.1.E-05 | 212 | 564 | good | good | Example |
| 2 | B | 25 | 1060 | 818 | 56 | 55 | 23 | 476 | B | B | 9.1.E-06 | 213 | 571 | good | good | |
| 3 | C | 35 | 1082 | 842 | 75 | 63 | 25 | 476 | B | B | 7.9.E-06 | 218 | 579 | good | good | |
| 4 | D | 30 | 1068 | 820 | 46 | 58 | 22 | 463 | B | B | 6.5.E-06 | 223 | 595 | good | good | |
| 5 | D | 30 | 1083 | 768 | -6 | 69 | 27 | 459 | B | B | 8.7.E-06 | 218 | 573 | good | good | |
| 6 | D | 30 | 1035 | 822 | 48 | 92 | 33 | 500 | B | B | 8.9.E-06 | 227 | 581 | good | good | |
| 7 | D | 30 | 1038 | 823 | 49 | 51 | 18 | 504 | B | B | 1.1.E-05 | 204 | 543 | good | good | |
| 8 | D | 30 | 1091 | 810 | 36 | 68 | 48 | 431 | B | B | 5.3.E-06 | 220 | 605 | good | good | |
| 9 | D | 30 | 1038 | 831 | 57 | 71 | 29 | 301 | B | B | 5.2.E-06 | 226 | 616 | good | good | |
| 10 | D | 30 | 1051 | 831 | 57 | 73 | 28 | 545 | B | B | 1.1.E-05 | 210 | 547 | good | good | |
| 11 | E | 40 | 1061 | 838 | 75 | 61 | 19 | 455 | B | B | 7.5.E-06 | 223 | 588 | good | good | |
| 12 | F | 30 | 1067 | 824 | 44 | 59 | 22 | 459 | B | B | 7.4.E-06 | 222 | 592 | good | good | |

| No. | Steel type | Plate thickness (mm) | Heating temp. (°C) | Cooling start temp. (surface) (°C) | Cooling start temp. - Ar$_3$ (surface) (°C) | Average cooling rate | | Cooling stop temp. (t/2) (°C) | Micro structure | | Hydrogen diffusion co-efficient (cm$^2$/s) | HV 0.1 (S + 0.5) | Tensile strength (MPa) | HIC performance | | Remarks |
|---|---|---|---|---|---|---|---|---|---|---|---|---|---|---|---|---|
| | | | | | | S + 0.5 (°C/s) | t/2 (°C/s) | | S + 0.5 | t/2 | | | | Surface layer | t/2 | |
| 13 | D | 30 | 960 | 811 | 37 | 72 | 27 | 476 | B | B | 1.4.E-05 | 197 | 507 | good | good | |
| 14 | D | 30 | 1065 | 736 | -38 | 62 | 24 | 468 | F+B | F+B | 4.8.E-06 | 263 | 502 | poor | poor | |
| 15 | D | 30 | 1078 | 826 | 52 | 142 | 48 | 474 | B | B | 5.3.E-06 | 273 | 628 | poor | good | |
| 16 | D | 30 | 1066 | 837 | 63 | 15 | 6 | 473 | B | F+P | 4.2.E-06 | 182 | 506 | good | poor | Comparative exanple |
| 17 | D | 35 | 1073 | 830 | 56 | 72 | 30 | 232 | B | B+M | 3.1.E-06 | 261 | 639 | poor | poor | |
| 18 | D | 25 | 1073 | 827 | 53 | 138 | 63 | 469 | B | B | 4.0.E-06 | 269 | 630 | poor | poor | |
| 19 | D | 30 | 1049 | 832 | 58 | 49 | 23 | 597 | B | B+MA | 4.2.E-06 | 186 | 498 | good | poor | |
| 20 | G | 30 | 1059 | 826 | 52 | 63 | 24 | 471 | B | B+MA | 4.9.E-06 | 267 | 604 | poor | poor | |
| 21 | H | 30 | 1071 | 822 | 48 | 59 | 21 | 463 | B | B+MA | 4.7.E-06 | 255 | 608 | poor | poor | |
| 22 | I | 30 | 1063 | 819 | 49 | 59 | 23 | 466 | B | B | 4.4.E-06 | 221 | 591 | good | poor | |

Note 1: Underlined if outside the scope of the disclosure.
Note 2: "S + 0.5" indicates the position of 0.5 mm below steel plate surface.
Note 3: For microstructure, B denotes bainite, F denotes fenite, P denotes pearlite, and MA denotes martensite austenite constituent.

As listed in Table 2, Nos. 1 to 12 are our examples in which the chemical compositions and manufacturing conditions are within the appropriate ranges of the present disclosure. For all of the steel plates of our examples, the tensile strength was 520 MPa or more, the hydrogen diffusion coefficient was $5.0 \times 10^{-6}$cm$^2$/s or more, and HV 0.1 at 0.5 mm below the surface of the steel plate was 250 or less. Accordingly, the high strength steel pipes manufactured therefrom also had good HIC resistance in the surface layer and the central segregation area.

In contrast, Nos. 13 to 19 are comparative examples whose chemical compositions are within the scope of the present disclosure but whose manufacturing conditions are outside the scope of the present disclosure. Thus, HV 0.1 at 0.5 mm below the surface of the steel plate was greater than 250, or the hydrogen diffusion coefficient was less than $5.0 \times 10^{-6}$cm$^2$/s, resulting in inferior HIC resistance in the surface layer or the central segregation area.

For Nos. 20 to 22 whose chemical compositions are outside the scope of the present disclosure, HV 0.1 at 0.5 mm below the surface of the steel plate was greater than 250, or the hydrogen diffusion coefficient was less than $5.0 \times 10^{-6}$cm$^2$/s, resulting in inferior HIC resistance in the surface layer or the central segregation area.

INDUSTRIAL APPLICABILITY

The high strength steel plate for sour-resistant line pipes according to the present disclosure has excellent HIC resistance both in the central segregation area and the surface layer. Therefore, steel pipes (such as electric-resistance welded steel pipes, spiral steel pipes, and UOE steel pipes) manufactured by cold-forming the disclosed steel plate can be suitably used for transportation of crude oil and natural gas that contain hydrogen sulfides where sour resistance is required.

**Claims**

1. A high strength steel plate for sour-resistant line pipes, comprising:

    a chemical composition containing, by mass%, C: 0.02 % to 0.08 %, Si: 0.01 % to 0.50 %, Mn: 0.50 % to 1.80 %, P: 0.001 % to 0.015 %, S: 0.0002 % to 0.0015 %, Al: 0.01 % to 0.08 %, and Ca: 0.0005 % to 0.005 %, with the balance being Fe and inevitable impurities, wherein
    a hydrogen diffusion coefficient at a plate thickness center is $5.0 \times 10^{-6}$cm$^2$/s or more,
    a maximum value of Vickers hardness HV 0.1 at 0.5 mm below a surface of the steel plate is 250 or less, and
    a tensile strength is 520 MPa or more.

2. The high strength steel plate for sour-resistant line pipes according to claim 1, wherein the chemical composition further contains, by mass%, at least one selected from the group consisting of Cu: 0.50 % or less, Ni: 0.50 % or less, Cr: 0.50 % or less, and Mo: 0.50 % or less.

3. The high strength steel plate for sour-resistant line pipes according to claim 1 or 2, wherein the chemical composition further contains, by mass%, at least one selected from the group consisting of Nb: 0.005 % to 0.1 %, V: 0.005 % to 0.1 %, and Ti: 0.005 % to 0.1 %.

4. A method of manufacturing a high strength steel plate for sour-resistant line pipes, the method comprising:

    preparing a slab having a chemical composition containing, by mass%, C: 0.02 % to 0.08 %, Si: 0.01 % to 0.50 %, Mn: 0.50 % to 1.80 %, P: 0.001 % to 0.015 %, S: 0.0002 % to 0.0015 %, Al: 0.01 % to 0.08 %, and Ca: 0.0005 % to 0.005 %, with the balance being Fe and inevitable impurities, then heating the slab to a temperature of 1000 °C to 1300 °C, and then hot rolling the slab to obtain a steel plate; and
    then subjecting the steel plate to controlled cooling under a set of conditions including:

        a temperature of a surface of the steel plate at the start of cooling being (Ar$_3$ - 10°C) or higher;
        an average cooling rate in a temperature range from 750 °C to 550 °C in terms of a temperature of the steel plate at 0.5 mm below the surface of the steel plate being 100 °C/s or lower;
        an average cooling rate in a temperature range from 750 °C to 550 °C in terms of a temperature of the steel plate at a plate thickness center being 15 °C/s or higher and 60 °C/s or lower; and
        a cooling stop temperature in terms of the temperature of the steel plate at the plate thickness center being 250 °C to 550 °C.

5. The method of manufacturing a high strength steel plate for sour-resistant line pipes according to claim 4, wherein the chemical composition further contains, by mass%, at least one selected from the group consisting of Cu: 0.50 % or less, Ni: 0.50 % or less, Cr: 0.50 % or less, and Mo: 0.50 % or less.

6. The method of manufacturing a high strength steel plate for sour-resistant line pipes according to claim 4 or 5, wherein the chemical composition further contains, by mass%, at least one selected from the group consisting of Nb: 0.005 % to 0.1 %, V: 0.005 % to 0.1 %, and Ti: 0.005 % to 0.1 %.

7. A high strength steel pipe using the high strength steel plate for sour-resistant line pipes as recited in any one of claims 1 to 3.

## INTERNATIONAL SEARCH REPORT

| International application No. |
| --- |
| PCT/JP2017/035330 |

**A. CLASSIFICATION OF SUBJECT MATTER**
Int. Cl. C22C38/00(2006.01)i, C21D8/02(2006.01)i, C22C38/06(2006.01)i, C22C38/58(2006.01)i

According to International Patent Classification (IPC) or to both national classification and IPC

**B. FIELDS SEARCHED**

Minimum documentation searched (classification system followed by classification symbols)
Int. Cl. C22C38/00-38/60, C21D8/02

Documentation searched other than minimum documentation to the extent that such documents are included in the fields searched
Published examined utility model applications of Japan   1922-1996
Published unexamined utility model applications of Japan   1971-2017
Registered utility model specifications of Japan   1996-2017
Published registered utility model applications of Japan   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-241270 A (JFE STEEL CORP.) 10 December 2012 (Family: none) | 1-7 |
| A | JP 2013-139630 A (JFE STEEL CORP.) 18 July 2013 (Family: none) | 1-7 |
| A | WO 2014/010150 A1 (JFE STEEL CORP.) 16 January 2014 & US 2015/0152982 A1 & EP 2871252 A1 & CN 104428437 A & RU 2621093 C2 & KR 10-2017-0083158 A | 1-7 |
| A | WO 2006/003775 A1 (SUMITOMO METAL INDUSTRIES, LTD.) 12 January 2006 & US 2007/0137736 A1 & EP 1785501 A1 & CA 2569907 A1 & EA 200700026 A1 & CN 1969053 A & UA 81878 C2 | 1-7 |

☐  Further documents are listed in the continuation of Box C.    ☐  See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 13.12.2017 | 26.12.2017 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3951428 B
- JP 3951429 B
- JP 2002327212 A
- JP 3711896 B